# EUROPEAN PATENT APPLICATION

(11) **EP 1 398 980 A1**
(43) Date of publication of application: **17.03.2004**
(21) Application number: 02380190.5
(22) Date of filing: 06.09.2002
(51) Int. Cl.: H04Q 7/30

(54) **Tetra base station with ethernet architecture**

(71) Applicant: Teltronic S.A.U., 50027 Zaragoza (ES)
(72) Inventor: Perez Fantova, Alfredo, 50057 Zaragoza (ES); Fontecha, Marta, 50057 Zaragoza (ES); Magallon, Oscar, 50057 Zaragoza (ES); Calderon, Alfredo, 50057 Zaragoza (ES)
(74) Representative: Primo de Rivera y Urquijo, Jose Antonio

(57) **Abstract**

A TETRA base station with Ethernet architecture is described, developed as a base station repeater BSR, such that the communication between the BSR and other system devices is carried out through Ethernet handlers. The connectivity in a BSR is possible as a result of the particularities defined by the invention that the physical Ethernet handler acts as input/output for complete communication with the BSR; the TETRA layer 2 has been completely implemented within the BSR with the use of 32 bits RISC type processors included in the BSR; and the internal synchronization for each BSR is carried out by virtue of the development of the synchronization system of the external GPS signal within the BSR.

## Description

### Object of the Invention

The present invention refers to a TETRA base station with Ethernet architecture, which provides essential novelty features and significant advantages with respect to the known and used means for the same purposes in the current state of the art.

More specifically, the invention proposes the development of a TETRA (TErrestrial Trunked RAdio) infrastructure known as NEBULA, and for the purpose of which a TETRA Base Station (TBS) has been developed, identified as Base Station Repeater (BSR), whose objective is to communicate with other components of the TETRA, NEBULA system, this communication being performed between the BSR and the other devices through Ethernet handlers.

The field of application of the invention is comprised within the industrial sector dedicated to manufacturing general communications devices.

### Background of the Invention

Generally, a wide variety of communications devices are known for a wide range of applications. Specifically, mobile communications have experienced a rapid evolution, currently being incorporated in the majority of the sectors of the art.

In this sense, the TETRA standard has been a very valuable tool for manufacturers and users of these devices by providing a set of options by means of which significant improvements in communications have been obtained.

As mentioned, multiple devices are known in the state of the art which are applicable to the telecommunications sector: Specifically, international patent application document number PCT WO 01/45335 proposes a call routing method in a telecommunications system which uses at least one mobile services switching center and at least one connected base station, a connection thereby being established through mobile stations with the mobile services switching center, through the base station, by means of using a first signaling protocol predetermined in the connection by radio. The telecommunication system also comprises a data transmission network in which the data is transmitted in packets in accordance with a specific protocol for the data transmission network, as well as a server which communicates with the mobile services switching center and the data network in packets, as from which a communication is established through the data network in packets and the server and mobile services switching center.

### SUMMARY OF THE INVENTION

The present invention has a fundamental objective of developing a TETRA Base Station with Ethernet architecture, and to do so, it develops a TETRA infrastructure which incorporates a base station repeater whose hardware includes two physical drivers for preventing the possibility of redundancy. These drivers permit using the Ethernet 802.3 standard for 10 or 100 Mbps, thus permitting the use of common Ethernet switchers on the networking market in order to carry out the connections between the system's different modules. On the other hand, as particularities of the invention, it also proposes implementing the TETRA layer 2 within the base station repeater (BSR), as well as using a GPS synchronization system within said station due to the TETRA standard synchronization requirements between the different base station repeaters, which permits using the Ethernet interface for the connection between the system's different devices by not originating from the connection synchronization.

As can be understood, the invention differs from the known art in both the protocols used for the connections through Ethernet and in the manner of implementing the TETRA layer 2, as well as in the manner of carrying out the internal synchronization for each station repeater as from the external GPS signal, the latter being features which have not been foreseen by the document of the prior art.

### Brief Description of the Drawings

The drawings accompanying the present description show the following:
Figure 1 shows a blocks diagram of the BSR connectivity with the Nebula system, in which the connections in BSR are Ethernet connections, and the network lines are also Ethernet connections;
Figure 2 graphically shows the planes used for the BSR communication with other components within the Nebula system;
Figure 3 schematically shows the distribution of TETRA layers between the BSR and the Nebula system Central Node Controller (CNC), and
Figure 4 also shows a schematic representation of the division of worlds between the BSR and other Nebula components in relation to the synchronized systems.

### Detailed Description of the Invention

Below, a detailed description of the preferred embodiment of the present invention will be made, making reference for this to the figures in the drawings, when necessary.

As defined at the beginning of the description, the objective of the invention consists of developing a TETRA infrastructure, specifically a Tetra Base Station (TBS), in which the physical TETRA layer is located, and in which each manufacturer can introduce the rest of the TETRA layers defined in said standard. Specifically, the name used for this TBS in the Nebula system is Base Station Repeater (BSR), and its function is to communicate with other Nebula system components, this communication being performed by means of Ethernet handlers, as previously indicated.

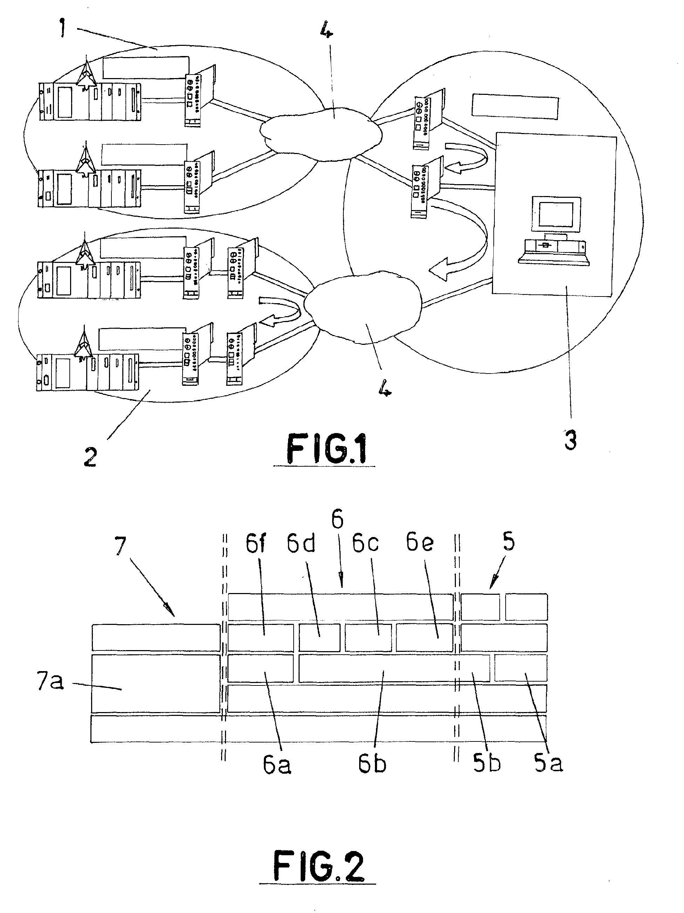

In this sense, if looking at the graphic appearing in figure 1 of the drawings, the graphic representation of a blocks diagram can be seen, representative of the BSR 1 connectivity with other Nebula system components 2, using network connections and network lines for this purpose, which are Ethernet connections, through suitable communication protocols 4. A central node controller 3 includes, in a known manner, the switching control node (CNC).

According to the particular features of the invention, the Ethernet connectivity in a BSR is possible as a result of:
- The physical Ethernet handler, which acts as input/output for complete communication with the BSR;
- The TETRA layer 2 implemented in its entirety within the BSR, and
- The internal synchronization for each BSR as from the external GPS signal.

The previously explained concepts, together with the advantages provided by the system, will be developed below with the help of figures 2 to 4 of the attached drawings.

Thus, in the first place, in reference to the physical Ethernet handler, it means that the BSR is using the Ethernet 802.3 standard for a speed of 10 or 100 Mbps. Each BSR has two physical handlers included in its hardware for preventing the possibility of redundancy. This means that in order to make the connectivity between the different modules in the Nebula system, it is only necessary to use a normal Ethernet switcher on the networking market.

According to figure 2, it can be seen that three planes 5, 6, 7 have been defined for establishing communications as from the BSR, a control plane 5, a maintenance plane 6, and a user's plane 7, respectively. The control plane 5 is encapsulated on Internet protocol IP and (UDP 5a/ TCP 5b). Plane U includes proprietary TUP protocol 7a (TETRA User Plane), in which the problem of overspending is reduced to a minimum. Lastly, the maintenance plane 6, encapsulated on IP (UDP 6a/ TCP 6b), permits the standardized services to be used in the IP (Internet Protocol) world, with the use of, for example:
* http (6c): for programming the parameters;
* ftp (6d): for updating the software of the different processors;
* telnet (6e); for performing maintenance traces, and
* snmp (6f): for controlling the remote BSR alarms and indicators.

According to another feature of the invention, the BSR has completely implemented layer 1 and layer 2. According to the TETRA standard, three layers are described, of those which layer 1 and layer 2 must be synchronized with the TETRA frame formation TDMA structure, while layer 3 can be asynchronous in relation to the TETRA TDMA frame formation.

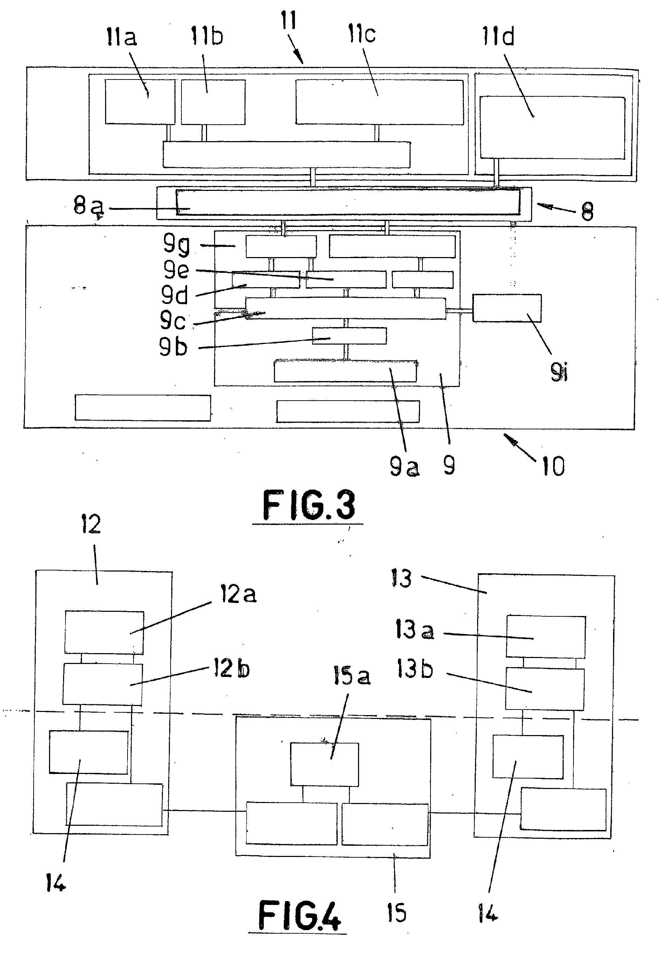

Figure 3 shows the distribution of the TETRA layers between the BSR 10 and the CNC 11 in the Nebula system. The complete implementation of layer 1 (with no specific numerical reference) and layer 2 (indicated with numerical reference 9) proposed by the invention is possible as a result of the use of 32 bits RISC processors included in the BSR 10, since it is necessary to carry out an arduous job with the BSR processor in order to carry out the complete layer 2 (reference 9) within it.

In the figure, it can be seen that the connection between the BSR 10 with the central node controller 11 is carried out through the communication planes defined in figure 2, which act as Ethernet interface, and which have been identified in their entirety with numerical reference 8. The sub-blocks appearing inside of each block 8, 10, 11, are identified as follows:
- 8a:: NTL SAP, Nebula TETRA LLC service access point
- 9a:: LMAC
- 9b:: TMV SAP
- 9c:: UMAC
- 9d:: TMA-SAP
- 9e:: TMB-SAP
- 9f:: TMC-SAP
- 9g:: LLC, Logic link control
- 9h:: MC, Main control
- 9i:: TMD-SAP
- 11a:: CMCE, Circuit mode control entity;
- 11b:: MM, Mobility management;
- 11c:: SDNCP (PDP) IP, Sub-network dependent convergence protocol;
- 11d:: M&C, Maintenance and control
- 11e:: BLE, Base link entity

Now making reference to the third particularity of the invention which was previously mentioned, it is important to take into account that the TETRA standard is very exact with the synchronization between the different BSRs, which means that it is necessary to transmit with two different BSRs in the same quarter symbol, approximately 13.18 µs. This is necessary if the Roaming and Handover functions defined in the TETRA standard are required.

Said capacity is possible as a result of the use of a development of the GPS synchronization system within the BSR, For this reason, it is possible to use the Ethernet interface as the interface for connecting the BSR with other Nebula devices, since the synchronization does not come from the connection.

Figure 4 shows the division of worlds between the BSR and other Nebula components in relation to the synchronized systems. The figure shows SBS stations 12, 13, each one of which includes respective BSR modules 12a, 12b; 13a, 13b, as well as internal synchronism plates 14. Both SBS stations 12, 13 appear related with an asynchronous system 14,constituted of a central node controller (CNC) which includes the switching control node (SNC) 14a.

As can be understood, the preceding corresponds only to one preferred embodiment of the invention, due to which it should not be understood from a limiting point of view, but rather only illustrative, it therefore being susceptible to modifications likewise comprised within the scope of the invention, defined by the following claims.

## Claims

1. TETRA base station with Ethernet architecture, for communicating a base station repeater (BSR) with other components of the Nebula system through Ethernet handlers, which is **characterized in that** the Ethernet connectivity in a BSR is carried out as a result of:
- a physical Ethernet handler acting as input/output for the complete communication with the BSR;
- the TETRA layer 2 has been implemented in its entirety within the BSR, and
- an internal synchronization is provided for each BSR as from the external GPS signal.

2. TETRA base station according to claim 1, **characterized in that** each BSR includes two physical handlers in its hardware for preventing the possibility of redundancy, such that the connectivity between the different modules is carried out with the use of only one normal Ethernet switcher of the networking market.

3. TETRA base station according to claim 1 or 2, **characterized in that** three communications planes are defined between the BSR and other components of the system, namely, a control plane (5), encapsulated on Internet protocol IP and (UDP/TCP); a maintenance and control plane (6), with TUP proprietary protocol, in which the problem of overspending is reduced to a minimum; and a maintenance plane (7), encapsulated on Internet protocol IP, in which the standardized services of said IP protocol are used.

4. TETRA base station according to claim 1, **characterized in that** the implementation of the entire TETRA layer 2 in the BSR, together with layer 1, is carried out with the use of 32 bits RISC processors included in said BSR.

5. TETRA base station according to claim 1, **characterized in that** the internal synchronization capacity for each BSR is obtained by virtue of a development of the synchronization system of the external GPS signal within the BSR.
